# EUROPEAN PATENT APPLICATION

(11) **EP 1 309 108 A1**
(43) Date of publication of application: **07.05.2003**
(21) Application number: 01309222.6
(22) Date of filing: 31.10.2001
(51) Int. Cl.: H04B 10/08, H04B 10/158

(54) **Optical transceiver with automatic power shut-down arrangement**

(71) Applicant: Agilent Technologies, Inc. (a Delaware corporation), Palo Alto, CA 94303 (US)
(72) Inventor: Ash, Richard Mark, Bury St.Edmunds.Suffolk IP33 2EZ (GB)
(74) Representative: Coker, David Graeme

(57) **Abstract**

An optical transceiver for a Raman amplified communications network comprising a control unit that prevents the transmission of the Raman pump signal in response to the loss of incoming data signals.

## Description

This invention relates to the field of receivers for fibre optic communication systems, and in particular for a receiver that mitigates the risk of ocular damage resulting from a broken optical fibre.

Optical fibre systems have limitations placed on the safe working level of optical power that can be transmitted so that in the event that a maintenance worker inadvertently views the broken end of such an optical fibre the optical energy transmitted from the fibre is unlikely to damage the retina of the worker. A typical power limit for the wavelengths used in' optical communication systems is 15 mW. Powers significantly greater that this can lead to the surface of the retina being irreversibly damaged, causing 'blind spots' to appear in the field of vision.

German patent application DE 33 40 427 discloses a method by which a transmitting laser is turned off, or its output power reduced, if the cable to which it is attached is removed from its connection. US patent 5 475 521 discloses a method of reducing the power fed to a pump laser if the power input to a related optical fibre amplifier falls below a defined threshold. This prevents the generation of high-power optical spikes that can potentially damage network devices.

According to a first aspect of the invention there is an optical fibre receiver module comprising; an input port for receiving, in use, an optical signal from an optical fibre, a detector for detecting, in use, the presence of an optical data signal at the input port, an amplification unit for transmitting, in use, an optical amplification signal to the input port, characterised in that the receiver further comprises control means, the control means, in use, preventing transmission of the optical amplification signal in response to the loss of an optical data signal at the input port. The optical data signal received may be a wavelength division multiplexed signal. The receiver may further comprise an interface for transmitting electrical data signals.

The control means may prevent the transmission of the optical amplification signal by reducing the power of the optical amplification signal to a safe working level. Alternatively, the control means may prevent the transmission of the optical amplification signal by switching the optical amplification signal out of the optical fibre.

According to a second aspect of the invention there is provided an optical fibre transceiver comprising an optical fibre receiver module as described above, an optical fibre transmitter for transmitting, in use, an optical data signal to an output port, the output port, in use, being connected to a further optical fibre. Preferably, the transceiver further comprises a filter to remove substantially an optical amplification signal received, in use, at the output port. The optical data signal transmitted in use may be a wavelength division multiplexed signal. The optical fibre transceiver may further comprise an interface for transmitting electrical data signals.

According to a third aspect of the invention there is provided a method of amplifying an optical data signal, the method comprising the steps of: (a) receiving an optical data signal from an optical fibre; (b) transmitting an optical amplification signal to the optical fibre such that the optical data signal is amplified; the method being characterised by the additional step of (c) preventing the transmission of the optical amplification signal if no optical data signal is received from the optical fibre. The optical data signal may be a wavelength division multiplexed signal.

Since the introduction of fibre optic transmission systems there has been a continual trend towards increased data transmission rates, with 10 Gb/s transmission systems now in use. In addition to this, systems have employed Wavelength Division Multiplexing (WDM), which involves the transmission of a number of signals at different transmission wavelengths within a single optical fibre, and Dense Wavelength Division Multiplexing (DWDM), in which as many as 80 different transmission wavelengths are transmitted over a single fibre.

As the data transmission rates increase, it is necessary to increase the launch powers of the transmitting lasers and to have an increased incident power level at the receiver in order to be able to achieve the required rise and fall times necessary to form and detect the transmission signals. A well known technique which can be used to achieve these power levels is the deployment of rare earth doped fibre amplifiers, such as erbium doped fibre amplifiers (EDFAs) which can amplify transmission systems at and around the 1.55µm transmission window. The main disadvantages of EDFAs are that they are expensive to deploy in networks, as they need to be installed at regular distances along the transmission path (for example, every 20-40 km), and that they have a limited gain band, so that they are only effective when used with signals within a limited wavelength band.

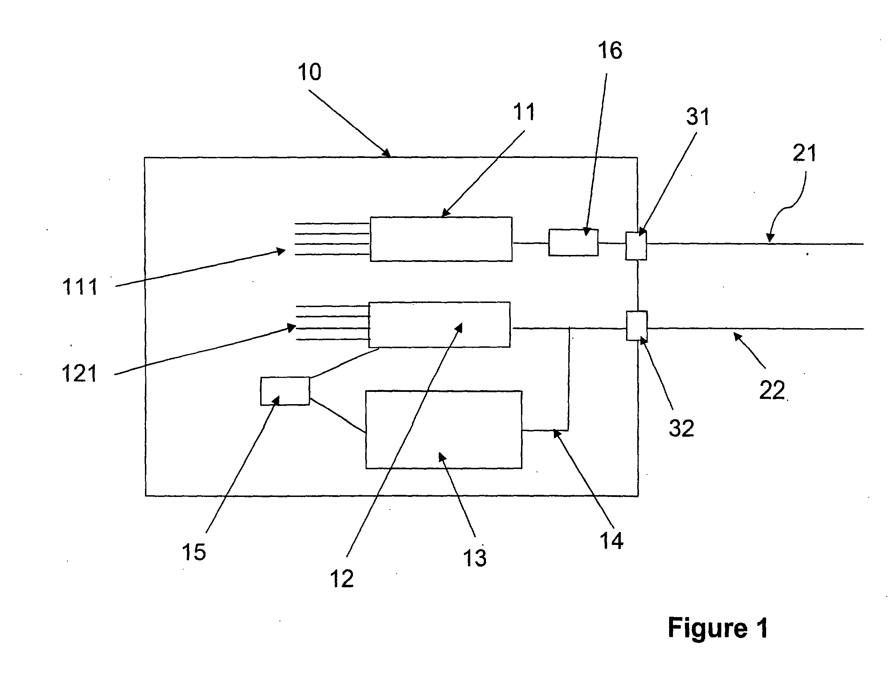

Figure 1 shows a schematic depiction of a communications network incorporating the present invention. Transceiver unit 10 is connected to first optical fibre 21 and second optical fibre 22. These optical fibres are connected to a transmission network (not shown) and carry signals to and from the transceiver unit 10. The transceiver unit 10 comprises an optical transmitter 11, optical receiver 12, pump laser unit 13, optical tap 14 and control unit 15.

The optical transmitter 11 is a WDM transmitter that is coupled to the first optical fibre 21 via output port 31 such that transmission signals generated by the optical transmitter are transmitted over the first optical fibre. The optical transmitter 11 has an electrical interface 111 which receives electrical signals; the optical transmitter then modulates and multiplexes these electrical signals to form the signals required to generate the WDM optical output signals.

The optical receiver 12 is a WDM receiver that is coupled to second optical fibre 22 via input port 32. WDM optical signals are coupled to the optical receiver 12 from the second optical fibre 22, where they are converted from the optical domain to the electrical domain and demultiplexed and demodulated as required in order to generate a number of different electrical signals.- These electrical signals are then transmitted via electrical interface 121. The electrical interfaces 111 and 121 connect the transceiver to data sources and sinks, for example local area networks or computer hosts.

Rather than using rare-earth doped fibre amplifiers, Raman amplification is used to provide sufficient optical power. Raman amplification is a distributed amplification phenomenon whereby a very high power (for example, 10-1000 mW) pump signal is coupled into the transmission fibre in a counter-propagating direction, i.e. pump laser unit 13 is connected to the second optical fibre 22 via the input port 32 so that the pump signals are launched in the opposite direction to the WDM optical signals received by the receiver 12. The use of these very high power signals initiates non-linear effects within the optical fibre such that, if the wavelength separation between the WDM signal and the pump signal is correct, power is transferred from the pump signal to the WDM signal, leading to amplification of the WDM signal. Accordingly, the pump laser unit 13 comprises a Raman pump laser suitable for amplifying the wavelengths used in the WDM transmission system. A suitable wavelength separation between the pump signal and the WDM signal is approximately 100 nm for WDM signals in the 1300 nm and 1550 nm transmission windows. The pump laser unit 13 is connected to the input port 32 via WDM optical tap 14.

In the event that the optical receiver 12 does not receive any WDM signals arriving at the input port then it is a reasonable assumption that the second optical fibre has been broken somewhere along its length. In response to such an event, the control unit 15 detects the absence of a WDM signal and shuts down the pump laser unit 13. This mitigates the risk that a repair worker could view the broken end of the second optical fibre and have their eyesight damaged by the pump laser signal. It should be possible for the control unit to shut down the pump laser unit within 1 µs of detecting the absence of a WDM signal, thus further reducing the possibility of eye damage occurring to a repair worker.

It will be readily understood that the control unit could be implemented in a number of different ways and that all of these different implementations, and variants thereof, will fall within the scope of the present invention. For example, the absence of a received WDM signal could be detected within the optical receiver and a control signal transmitted as necessary to the control unit.

Alternatively, the control unit could be fed an optical signal from the optical receiver (by, for example a 5% optical tap) and the control unit would detect the absence of a received WDM signal. The control unit could be a separate unit as shown in Figure 1 or it could be integrated within either the optical receiver 12 or the pump laser unit 13. In the alternative, the functionality of the control unit could be divided between the optical receiver and pump laser unit. Rather than completely shutting down the pump laser unit if the absence of a WDM signal is detected, the output power of the pump laser unit could be decreased to a safe level, i.e. below 10 mW.

The optical transceiver 10 additionally comprises an isolator 16 that prevents any pump power being transmitted along the first optical fibre 21 from interfering with the optical transmitter 11. Clearly, devices with an equivalent function, such as a suitably designed filter, could be used to allow the propagation of the outgoing WDM signals and to block any incoming pump signals.

The optical transceiver 10 could be implemented using discrete components or alternatively it could be integrated onto a single device in order to reduce manufacturing and processing costs. Although the preceding discussion has assumed that the transmitter and receiver are located together to form a single piece of equipment, it will be readily understood that the invention could be implemented using discrete transmitter and receiver modules.

Although the preceding discussion has referred to WDM signals and equipment, it will be understood that the difference between WDM and DWDM is an arbitrary matter of scale and that the present invention is equally suitable for use with DWDM, or any other variant of Wavelength Division Multiplexing. Furthermore, the invention could also be implemented using single wavelength transmission systems.

## Claims

1. An optical fibre receiver module comprising; an input port (32) for receiving, in use, an optical signal from an optical fibre (22), a detector (12) for detecting, in use, the presence of an optical data signal at the input port (22), an amplification unit (13) for transmitting, in use, an optical amplification signal to the input port, **characterised in that**
the receiver further comprises control means (15), the control means, in use, preventing transmission of the optical amplification signal in response to the loss of an optical data signal at the input port.

2. An optical fibre receiver according to claim 1 in which the optical data signal received in use is a wavelength division multiplexed signal.

3. An optical fibre receiver according to claim 1 or claim 2 further comprising an interface (121) for transmitting electrical data signals.

4. An optical fibre receiver according to any of claims 1 to 3 in which the control means (15) prevents the transmission of the optical amplification signal by reducing the power of the optical amplification signal to a safe working level.

5. An optical fibre receiver according to any of claims 1 to 3 in which the control means (15) prevents the transmission of the optical amplification signal by switching the optical amplification signal out of the optical fibre (22).

6. An optical fibre transceiver (10) comprising an optical fibre receiver module according to any of claims 1 to 5, an optical fibre transmitter (11) for transmitting, in use, an optical data signal to an output port (31), the output port (31), in use, being connected to a further optical fibre (21).

7. An optical fibre transceiver (10) according to claim 6, wherein the transceiver further comprises a filter (16) to remove substantially an optical amplification signal received, in use, at the output port (31).

8. An optical fibre transceiver (10) according to claim 6 or claim 7 in which the optical data signal transmitted in use is a wavelength division multiplexed signal.

9. An optical fibre transceiver (10) according to any of claims 6 to 8 further comprising an interface (111) for transmitting electrical data signals.

10. A method of amplifying an optical data signal, the method comprising the steps of:
(a) receiving an optical data signal from an optical fibre (22);
(b) transmitting an optical amplification signal to the optical fibre (22) such that the optical data signal is amplified;
the method being **characterised by** the additional step of
(c) preventing the transmission of the optical amplification signal if no optical data signal is received from the optical fibre.

11. A method of amplifying an optical data signal according to claim 10, in which the optical data signal is a wavelength division multiplexed signal.
